# FASCICULE DE BREVET EUROPEEN

(11) **EP 0 870 115 B1**
(45) Date de publication et mention de la délivrance du brevet: **12.02.2003**
(21) Numéro de dépôt: 97945909.6
(22) Date de dépôt: 12.11.1997
(51) Int. Cl.: F15D 1/06, C09K 3/00

(54) **PROCEDE DE TRANSPORT D'UN GAZ SOUS PRESSION EN PRESENCE D'UN FILM LIQUIDE**
VERFAHREN ZUM TRANSPORT EINES UNTER DRUCK STEHENDEN GASES IN ANWESENHEIT EINES FLÜSSIGEN FILMS
METHOD FOR TRANSPORTING GAS UNDER PRESSURE IN THE PRESENCE OF A LIQUID FILM

(30) Priorité: 13.11.1996 FR 9613925
(43) Date de publication de la demande: 14.10.1998
(73) Titulaire: INSTITUT FRANCAIS DU PETROLE, 92506 Rueil-Malmaison Cédex (FR)
(72) Inventeur: ROJEY, Alexandre, F-92500 Reuil Malmaison (FR); PALERMO, Thierry, F-92250 La Garenne Colombes (FR); FALCIMAIGNE, Jean, F-92270 Bois Colombes (FR)
(86) Numéro de dépôt international: FR9702030
(87) Numéro de publication internationale: WO98021489

(56) Documents cités:
- EP-A- 0 364 218
- EP-A- 0 471 465
- DE-A- 3 918 230
- US-A- 3 220 874
- US-A- 4 759 516
- US-A- 4 958 653

## Description

La présente invention concerne un procédé permettant de réduire les phénomènes de frottement existants entre un fluide en écoulement et la paroi d'une conduite dans laquelle il est transporté.

Elle trouve son application pour le transport de gaz sous pression et notamment celui du gaz naturel sous pression, en réduisant les pertes de charge, résultant des phénomènes de frottement.

Elle concerne plus particulièrement un procédé permettant de transporter le gaz naturel sous pression en présence d'une fraction liquide, l'écoulement formé du gaz et de la fraction liquide étant annulaire sur au moins une partie de la longueur de la conduite de transport.

Le transport du gaz naturel sous pression représente un enjeu économique important et les gazoducs intercontinentaux de transport du gaz nécessitent des investissements considérables. Le transport de gaz s'effectue en général sur des distances importantes, la pression de transport étant de l'ordre de 70 bars dans le cas d'une conduite à terre, mais pouvant atteindre environ 160 bars dans le cas d'une conduite en mer. Dans la majorité des cas, le gaz naturel transporté comporte au moins 90 % de méthane.

Les pertes de charge résultant des frottements entre le gaz en écoulement turbulent et la paroi interne du gazoduc sont importantes du fait notamment des distances élevées et contribuent à une augmentation du coût de production. Il s'avère donc nécessaire de réduire ces pertes de charge.

Une façon de procéder pour compenser les pertes de charge résultant de ces phénomènes de frottement, consiste à installer des stations de recompression régulièrement espacées le long de la conduite réglées pour compenser les pertes de charge. Un tel agencement accroît sensiblement les investissements nécessaires et entraîne une consommation d'énergie ainsi que des frais opératoires importants.

De plus, pour des conduites sous-marines, le procédé de recompression en cours de transport présente des difficultés de mise en oeuvre.

L'art antérieur décrit l'utilisation d'additifs tels que des polymères, qui sont ajoutés au fluide à transporter dans des proportions déterminées pour réduire les phénomènes de frottement.

La méthode décrite dans le brevet US-4,958,653 permet de doser les additifs réducteurs de frottement à ajouter dans une conduite de transport pour maximiser le débit de gaz pour des conditions de perte de charge fixées.

L'enseignement principal de ce document repose sur une méthode mettant en oeuvre principalement les étapes suivantes : on introduit un gaz sous pression à l'intérieur d'une conduite, on injecte en un premier endroit de la conduite une quantité d'additifs, on contrôle le débit du gaz en un second point de la conduite et on ajuste la quantité d'additifs injectée au premier point jusqu'à ce que le débit de gaz mesuré au niveau du second endroit atteigne une valeur maximale.

L'additif va de plus remplir les rugosités de la paroi interne de la conduite et en minimisant les aspérités diminuer les phénomènes de frottement.

Une telle méthode ne permet pas néanmoins de minimiser les pertes de charge pour un débit de gaz fixé.

Pour transporter un liquide visqueux, tel qu'un pétrole brut, il a été décrit une méthode consistant à ajouter un liquide moins visqueux, par exemple de l'eau, qui mise en écoulement avec le liquide de viscosité plus élevée, permet de réduire le frottement à la paroi.

Il a été découvert que dans le cas d'un écoulement d'un gaz sous pression, il est possible de réduire la perte de charge en injectant un liquide plus visqueux que le gaz transporté, en respectant des conditions permettant de réaliser un écoulement annulaire telles que décrites dans la demande française FR-A-2 751 049, publiée après la date de priorité du présent brevet.

La présente invention propose donc un procédé qui permet de pallier aux inconvénients de l'art antérieur précités, et qui consiste à injecter une fraction liquide à l'intérieur d'une conduite de transport de gaz, par exemple dans des conditions spécifiques, de façon à former avec le gaz à transporter un écoulement annulaire sur au moins une partie de la conduite.

La fraction liquide ainsi injectée va former un film stable entre la paroi interne de la conduite de transport et le gaz à transporter, qui va adhérer à la paroi interne de la conduite. Les effets de cisaillement rencontrés habituellement au niveau de la couche limite du gaz en écoulement lorsque l'écoulement est en contact direct avec la paroi interne de la conduite sont diminués par la présence de ce film annulaire stable.

La présente invention trouve avantageusement son application pour diminuer les pertes de charge au cours du transport d'un gaz naturel sous pression.

Elle peut aussi s'appliquer pour transporter tous types de gaz industriels sous pression tels que les gaz de synthèse formé par exemple d'un mélange d'oxyde de carbone et d'hydrogène, ou encore pour transporter de l'hydrogène, de l'éthylène......

Elle permet avantageusement de transporter en minimisant les pertes de charge, un gaz naturel sous pression comprenant au moins 90% de méthane.

La présente invention concerne un procédé de transport d'un fluide, par exemple, gaz sous pression, tel qu'un gaz naturel dans une conduite à partir d'un premier point vers un lieu de destination, par exemple une station de traitement, en minimisant les pertes de charge. Le procédé est caractérisé en ce qu'il comporte au moins les étapes suivantes :
- on envoie le gaz sous pression dans la conduite de transport avec un débit déterminé initialement, par exemple,
- on injecte au moins en un premier endroit de la conduite de transport une fraction liquide avec un débit choisi pour que l'ensemble formé par le gaz en écoulement et la fraction liquide injectée s'écoule sous la forme d'un écoulement en régime annulaire, la fraction liquide formant un film stable sur au moins sur une partie de la surface interne de la conduite,
- on sépare la fraction liquide et le gaz sous pression à l'arrivée sur le lieu de destination.

On injecte par exemple avec la fraction liquide un produit tel qu'un additif filmogène qui favorise la stabilité du film liquide sur la paroi.

L'état de surface interne de la conduite peut être constitué par un matériau mouillable par la fraction liquide injectée.

La surface interne de la conduite est par exemple munie de rainures et/ou de zones creuses favorisant l'adhésion du film liquide sur la paroi.

On détermine, par exemple le débit ou la quantité de la fraction liquide injectée en tenant compte des diagrammes d'écoulement des fluides, qui ont pu être établis préalablement.

Avantageusement, on contrôle la valeur du rapport du débit volumique de la fraction liquide injectée au débit volumique du gaz en écoulement.

Selon un mode de mise en oeuvre du procédé, le rapport du débit volumique de la fraction liquide injectée lors du transport du gaz sur le débit volumique du gaz en écoulement est de préférence inférieur à 10%.

La valeur minimale du rapport du débit volumique de la fraction liquide au débit volumique de gaz est comprise, de préférence, entre 1 pour cent et 1 pour mille. De cette manière, on obtient un film liquide stable à la paroi.

On régule, par exemple, la valeur du débit volumique de la fraction liquide injectée pour maintenir la valeur du rapport du débit volumique de la fraction liquide au débit volumique de la fraction de gaz dans un intervalle de valeurs, par exemple choisies pour maintenir un régime d'écoulement annulaire.

On injecte, par exemple, une fraction liquide au moins en partie formée d'une phase organique, ou constitué au moins en partie de pétrole brut ou d'une fraction de pétrole brut, ou encore un condensat ou une fraction de condensat.

On injecte, par exemple simultanément à la fraction liquide, un produit, tel qu'un additif dispersant pour éviter la formation d'hydrates, et/ou un additif anticorrosion.

La fraction liquide peut être avantageusement injectée à l'aide d'un dispositif adapté pour répartir ou distribuer cette fraction liquide sur sensiblement l'ensemble de la périphérie de la conduite.

L'invention concerne aussi un procédé permettant de transporter un fluide tel qu'un gaz en minimisant les pertes de charge.

Il est caractérisé en ce que le gaz est transporté en présence d'une fraction liquide sous forme d'un écoulement annulaire d'un point de départ jusqu'à au moins une station de recompression, et en ce que
- on sépare le gaz et la fraction liquide avant la station de recompression,
- on pompe ladite fraction liquide séparée et on comprime séparément ladite fraction de gaz séparée,
- on réinjecte ladite fraction liquide pompée dans ladite fraction de gaz recomprimé, et
- on transporte sous la forme d'un écoulement annulaire l'ensemble vers un point de destination ou une station de recompression

Le procédé s'applique particulièrement bien pour transporter un gaz naturel sous pression comprenant au moins 90% de méthane.

Selon un mode de réalisation de l'invention, la fraction liquide séparée est recyclée au moins au niveau d'un des conduits d'injection.

La séparation de la fraction liquide du gaz sous pression peut être réalisée dans un séparateur comportant au moins une partie de type cyclone, et/ou un garnissage de type coalesceur.

D'autres avantages et caractéristiques de la présente invention apparaîtront mieux à la lecture de la description donnée ci-après à titre d'exemples de réalisation, dans le cadre d'applications nullement limitatives, au transport d'un gaz naturel dans une conduite, en se référant aux dessins annexés où :
- les figures 1A, 1B et 1C schématisent le principe d'injection de la fraction liquide dans une conduite transportant du gaz naturel,
- la figure 2 montre dans un diagramme des vitesses superficielles (débit/section) du gaz et du liquide, les zones définissant des faciès que peut prendre un fluide en écoulement dans une conduite, et en particulier la zone d'écoulement annulaire recherchée dans le procédé selon l'invention,
- la figure 3 schématise une vue en coupe d'une conduite et d'un système spécifique d'injection de la fraction liquide,
- la figure 4 schématise un exemple de mise en oeuvre du procédé comportant une station de recompression, et
- la figure 5 montre en coupe une section d'une conduite de transport rainurée facilitant l'adhésion du film liquide.

Afin de mieux faire comprendre l'idée de l'invention, la description du procédé donnée ci-après s'applique au transport d'un gaz naturel sous pression, par exemple dans des conditions de transport similaires aux conditions précédemment définies, entre un point source et une station d'arrivée de traitement ou de stockage, par exemple.

Le procédé mis en oeuvre est schématisé à la figure 1A. Le gaz naturel à transporter circule dans une conduite 1 ayant un diamètre D compris, par exemple, entre 0,15 et 1,6 m et une section correspondante S. Le gaz naturel circule dans la conduite avec un débit dont la valeur a été déterminée initialement, et qui correspond à une vitesse superficielle V définie par le rapport débit/section.

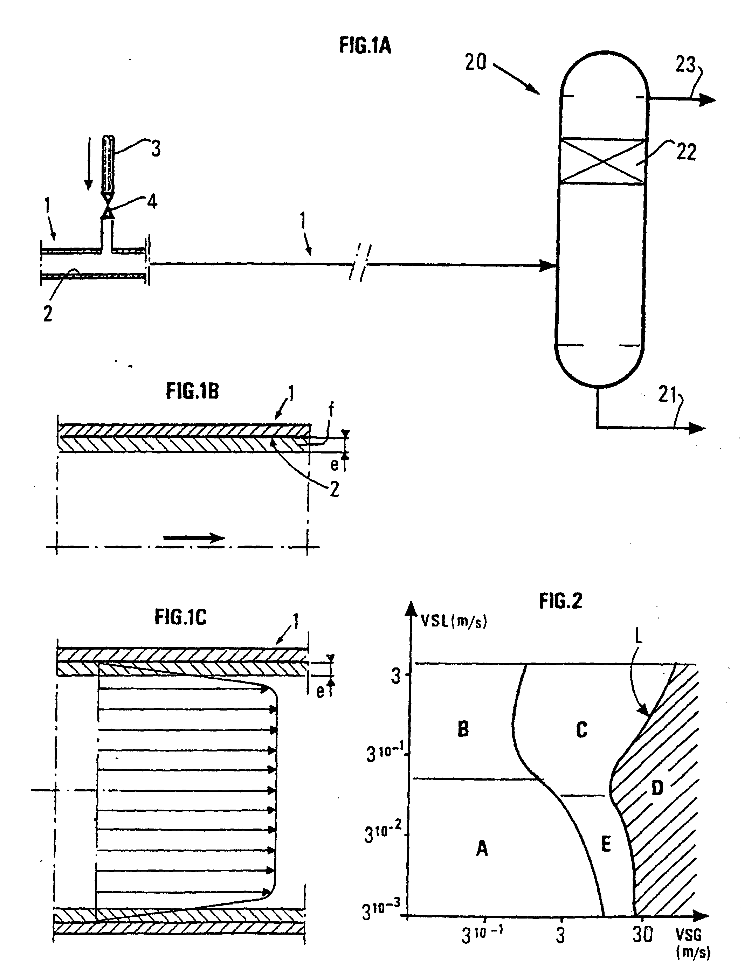

Une fraction liquide (Fig. 1B) ayant notamment pour fonction de réduire les frottements entre le gaz en écoulement et la paroi interne 2 de la conduite, est injectée en un premier endroit de la conduite, par exemple, par un conduit 3 débouchant dans la conduite de transport 1, le conduit étant par exemple muni d'une vanne 4 de régulation de débit.

Les conditions dans lesquelles on injecte la fraction liquide sont détaillées ci-après et sont telles que la fraction de liquide injectée et le gaz à transporter forment un écoulement annulaire représenté sur le schéma de la figure 1B.

La fraction liquide injectée par le conduit 3 forme un film f de préférence stable adhérant à la paroi interne 2 de la conduite de transport 1, sur au moins une partie de la longueur "I" de la conduite entre un point et la station d'arrivée.

La nécessité d'avoir un film stable à la paroi impose une valeur minimale pour le débit de liquide injecté.

Pour que le film f soit stable, il doit avoir une épaisseur e minimale, par exemple de quelques millimètres, ce qui conduit à respecter une valeur minimale pour le rapport du débit de liquide au débit de gaz.

Il a été trouvé que cette valeur minimale diminue avec la valeur du diamètre de la conduite. La valeur minimale de rapport du débit de liquide au débit de gaz est comprise par exemple entre un pour cent pour une conduite, de quelques pouces de diamètre et un pour mille pour une conduite ayant une valeur de diamètre de quelques dizaines de pouces.

Les conditions de stabilité du film ainsi formé peuvent résulter des conditions d'injection de la fraction liquide, et peuvent être améliorées, par exemple en ajoutant à la fraction liquide des additifs ou des produits ayant un rôle stabilisateur.

Le film annulaire liquide f stable d'épaisseur "e", comptée à partir de la paroi interne de la conduite de transport (Fig. 1B) est entraîné par le gaz naturel sous pression à transporter circulant avec une vitesse moyenne donnée à l'intérieur de la conduite. Du fait des interactions entre le gaz en écoulement et le film liquide, l'écoulement du gaz présente en général un profil de vitesse ayant une allure schématisée à la figure 1C. Les composantes des vitesses sont sensiblement constantes dans la zone centrale de l'écoulement. Au contraire, dans la couche limite en contact direct avec la paroi interne de la conduite, les phénomènes de viscosité induisent dans cette couche des cisaillements, et les composantes de la vitesse respectent un profil donné.

La présence d'un film liquide stable, interposé entre la veine de gaz en écoulement et la paroi interne de la conduite, permet d'éviter ces effets de cisaillement ou tout du moins de les minimiser (dans ce cas, la vitesse à l'interface gaz-liquide n'est pas nulle).

Le gradient de vitesse se trouve ainsi réduit au voisinage de la paroi interne de la conduite, et la perte de charge est diminuée dans des proportions dépendant notamment des conditions d'écoulement. La réduction de perte de charge ainsi obtenue peut être supérieure à 15 ou 20%.

Les conditions d'écoulement et en particulier les conditions dans lesquelles on injecte la fraction liquide pour former le film annulaire adhérant à la paroi et obtenir un écoulement de type annulaire gaz-liquide, sont par exemple déterminées à partir des diagrammes de distribution des régimes d'écoulement associés à un fluide de composition donné.

Le diagramme représenté sur la figure 2 montre les différents régimes d'écoulement d'un fluide formé par un liquide et un gaz, en fonction des vitesses de passage superficielles respectivement du gaz et du liquide.

Les zones A, B, C et E correspondent à un régime d'écoulement stratifié pour le fluide.

La zone A correspond à un écoulement de type stratifié sans vagues, la zone B à un régime d'écoulement à bulles pour lequel une des phases se présente sous la forme de bulles de taille plus ou moins importante à l'intérieur d'une seconde phase. La zone C est associée à un régime d'écoulement de type bouchon constitué d'une succession de poches de gaz et de liquide. La zone E correspond à un régime d'écoulement stratifié avec vagues.

La zone D qui se situe au-delà de la ligne frontière L concerne un régime d'écoulement annulaire.

La vitesse superficielle pour le gaz VSG est définie comme étant le débit du gaz par rapport à la section de la conduite, et la vitesse superficielle de la fraction liquide VSL également comme le rapport du débit sur la section de la conduite.

Les diagrammes de distribution des régimes d'écoulement peuvent avoir été obtenus préalablement par des essais réalisés à partir de gaz dont la composition est connue au cours desquels, on fait varier respectivement les valeurs de débit du gaz en écoulement et les valeurs de vitesse superficielle sous laquelle la fraction liquide est injectée dans la conduite de transport, et pour lesquels, on trace les différents diagrammes de distribution des régimes d'écoulement.

Pour un diagramme de distribution des régimes d'écoulement, on détermine une ligne frontière L définie par un ensemble de couple de valeurs pour les vitesses superficielles du gaz et du liquide, séparant la zone D de régime d'écoulement annulaire du fluide des autres régimes d'écoulement.

On remarque que le régime d'écoulement annulaire est obtenu pour une vitesse superficielle de passage du gaz VSG relativement élevée et une vitesse superficielle de passage de la fraction liquide VSL relativement faible.

A partir d'un diagramme de distribution tel que représenté sur la figure 2, il est possible de déterminer les valeurs des vitesses superficielles minimales du gaz à transporter permettant d'obtenir un écoulement de type annulaire.

On se place, de préférence, dans des conditions d'injection de la fraction liquide pour que le débit de la fraction liquide au cours du transport du gaz représente moins de 10% de débit volumique du gaz à transporter.

On observe que dans les conditions qui sont décrites sur la figure 2, il est nécessaire de faire circuler le gaz à une vitesse élevée par rapport aux conditions de transport habituelles.

Ceci peut conduire à des valeurs de perte de charge relativement élevées, même si la présence d'un film liquide réduit la valeur de la perte de charge correspondant à ces conditions.

Il est donc avantageux d'opérer avec des moyens permettant d'améliorer la stabilité du film liquide et ainsi d'obtenir un écoulement annulaire caractérisé par la présence d'un film liquide stable sur au moins une partie de la surface interne de la conduite, pour des vitesses de circulation du gaz sensiblement inférieurs à celles qui sont nécessaires en l'absence desdits moyens, et comparables aux vitesses de circulation habituellement utilisées dans les conduites de gaz.

Selon un mode de réalisation de l'invention, on injecte avec la fraction liquide un additif permettant de favoriser la stabilité du film liquide formé f.

La fraction liquide comprend, par exemple, un additif filmogène qui favorise le mouillage de la paroi interne de la conduite par la fraction liquide.

Il est également possible d'injecter avec la fraction liquide un agent épaississant tel qu'un polymère qui favorisera la stabilité du film liquide.

Selon un autre mode de mise en oeuvre du procédé selon l'invention, la fraction liquide est injectée avec, un ou plusieurs additifs anticorrosion et/ou un ou plusieurs additifs utilisés pour éviter la formation des hydrates susceptibles de boucher les conduites de transport. L'additif antihydrate est par exemple un additif dispersant de type tensioactif qui, en présence d'eau, empêche l'agglomération des gouttelettes d'eau et des cristaux d'hydrates.

La fraction liquide comprenant les additifs anticorrosion et/ou antihydrates en formant un film à la paroi renforce leur action, le refroidissement dû au milieu extérieur étant, par exemple, plus sensible au voisinage de la paroi.

Tout additif habituellement utilisé pour éviter la corrosion et/ou la formation d'hydrates, peut être ajouté à la fraction liquide.

Selon un autre mode de réalisation de l'invention, on utilise une conduite de transport ayant une surface interne permettant de favoriser l'adhésion du film liquide à la paroi et /ou l'écoulement du film liquide.

La surface interne de la conduite comporte, par exemple, un revêtement choisi pour favoriser l'adhésion du film à la paroi ou encore être traitée en conséquence.

Elle peut, par exemple avoir subi un traitement de surface destiné à améliorer la mouillabilité de la surface interne de la conduite par le film liquide.

Il est également possible d'utiliser une conduite présentant une certaine valeur de rugosité de surface ou encore une conduite dont la paroi interne est pourvue de moyens, tels des rainures, de préférence s'étendant longitudinalement telle que schématisée sur la figure 5.

Cette figure 5 la section en coupe d'un élément de conduite comportant cinq rainures Z1, Z2, Z3, Z4 et Z5 favorisant l'adhésion et l'écoulement du film liquide, les rainures étant disposées sur la surface interne de la conduite.

Ces rainures régulièrement disposées peuvent avoir une profondeur par exemple de l'ordre du dixième ou de quelques dixièmes de millimètres. La surface peut être également recouverte de zones creuses dont la profondeur est par exemple de l'ordre du dixième ou de quelques dixièmes de millimètres et la dimension par exemple de quelques millimètres.

Sans sortir du cadre de l'invention, et selon un autre mode de mise en oeuvre de l'invention, le système comporte plusieurs conduits similaires au conduit 3 permettant d'injecter une fraction liquide, par exemple en des points régulièrement espacés le long de la conduite. Les conditions d'injection doivent être telles que le rapport du débit de liquide au débit de gaz reste en tout point de la conduite situé à l'intérieur d'une fourchette préalablement fixée.

Il est également possible de combiner les effets résultants de l'addition dans la fraction liquide d'un produit stabilisant le film liquide ainsi que d'un état de surface contribuant également à stabiliser ce film liquide.

Le système permettant de mettre en oeuvre les étapes de l'invention est par exemple, équipé de dispositifs de mesure des paramètres caractérisant les conditions de transport, par exemple, des capteurs de température et de pression qui sont par exemple répartis le long de la conduite de transport 1.

La connaissance de ces paramètres peut avantageusement être utilisée pour corriger la quantité injectée de liquide.

De plus, il comporte par exemple des moyens de contrôle et de gestion, tel un micro-contrôleur mémorisant des données, en liaison avec les différents éléments du système pour acquérir les mesures, et émettre des signaux de commande vers les dispositifs à régler tels que les vannes de régulation de débit pour réguler le procédé et notamment adapter les conditions d'injection de la fraction liquide éventuellement en cours de production.

Ainsi, la mise en oeuvre du procédé peut se dérouler par exemple selon les conditions suivantes:
- on connaît la géométrie de la conduite, car elle a été choisie initialement en fonction notamment de la composition du gaz naturel à transporter, des conditions de pression et de température qui sont, par exemple, estimées et/ou déterminées au cours du transport, et de la valeur souhaitée du débit à l'arrivée,
- on détermine et/on fixe la valeur du débit de gaz à transporter, ainsi que les conditions dans lesquelles le gaz est transporté, et
- connaissant la composition du gaz naturel à transporter et disposant des diagrammes de distribution d'écoulement qui sont fonction notamment des conditions de transport, on envoie un débit de fraction liquide contrôlé de façon à transporter sous forme d'un écoulement annulaire le gaz et la fraction liquide injectée.

Le gaz et la fraction liquide injectée sont ainsi transportés jusqu'à un lieu de destination final ou un lieu intermédiaire sous forme d'un régime d'écoulement annulaire, par exemple un lieu de traitement, ou une station de recompression.

Pour pouvoir ajuster constamment le débit de la fraction liquide envoyée en vue de maintenir l'écoulement sous une forme annulaire, il est possible de relier la vanne 4 de régulation de débit au micro-contrôleur, qui la commande de façon à obtenir une valeur du rapport R correspondant au débit volumique de fraction liquide sur le débit volumique de gaz transporté, comprise dans un intervalle délimité par une valeur seuil minimale Rmin et une valeur seuil maximale Rmax. Ces deux valeurs seuils sont par exemple fixées ou encore elles peuvent être ajustées en fonction des conditions de transport.

La valeur seuil maximale Rmax du débit volumique de fraction liquide au débit volumique du gaz est, de préférence, inférieure à 10%.

La valeur seuil minimale Rmin du débit volumique de liquide au débit volumique de gaz est comprise, par exemple entre 1 pour cent et 1 pour mille.

La fraction liquide injectée est de préférence au moins en partie constituée par une phase organique ayant une volatilité suffisamment réduite pour éviter une perte trop importante par vaporisation dans la phase gazeuse.

Cette fraction liquide est par exemple formée par une fraction hydrocarbure en C₅₊ dont les constituants ont au moins cinq atomes de carbone.

Elle peut être formée, par exemple par un pétrole brut ou une fraction de pétrole brut.

Pour transporter un gaz associé, on peut injecter dans la conduite de transport comme fraction liquide, une fraction du pétrole brut qui est produit en même temps que le gaz associé, afin de réduire la perte de charge en ajustant la valeur du rapport du débit volumique de fraction liquide au débit volumique de gaz. Le procédé selon l'invention, s'applique ainsi au transport séparé de pétrole brut et de gaz associé dans lequel un débit contrôlé de pétrole brut est, par exemple, injecté à l'entrée de la conduite de transport du gaz associé, pour réduire les pertes de charge rencontrées dans la conduite de transport du gaz associé.

La fraction liquide peut également être constituée par un condensat ou une fraction de condensat. Dans le cas d'un gaz à condensat, une fraction du condensat produit en même temps que le gaz peut être ainsi injectée dans la conduite de gaz, pour réduire la perte de charge, par exemple en ajustant la valeur du rapport du débit volumique de fraction liquide au débit volumique de gaz.

Le procédé s'applique avantageusement pour le transport séparé de condensat et de gaz. Un débit contrôlé de condensat est par exemple injecté dans la conduite de transport de gaz pour réduire les pertes de charge rencontrées dans la conduite de transport de gaz.

La fraction liquide peut être également constituée par une phase aqueuse, de préférence contenant un solvant organique. On peut utiliser un alcool tel que le méthanol, ou un glycol tel que le mono éthylène glycol ou le diéthylène glycol.

Dans le cas d'un gaz saturé en eau, on injecte par exemple à l'entrée de la conduite de transport du gaz, un débit contrôlé de solvant organique destiné à éviter la formation d'hydrates, éventuellement additionné d'eau, de manière à obtenir un écoulement laminaire tout le long de la conduite, par exemple.

En effet, dans un tel cas, la quantité d'eau présente dans le gaz et susceptible de se déposer à l'intérieur de la conduite, par exemple par condensation, est relativement faible et varie le long de la conduite. Ceci ne permet pas d'avoir un écoulement en régime annulaire stable tout le long de la conduite. L'ajout de solvant et d'eau permet de palier cet inconvénient.

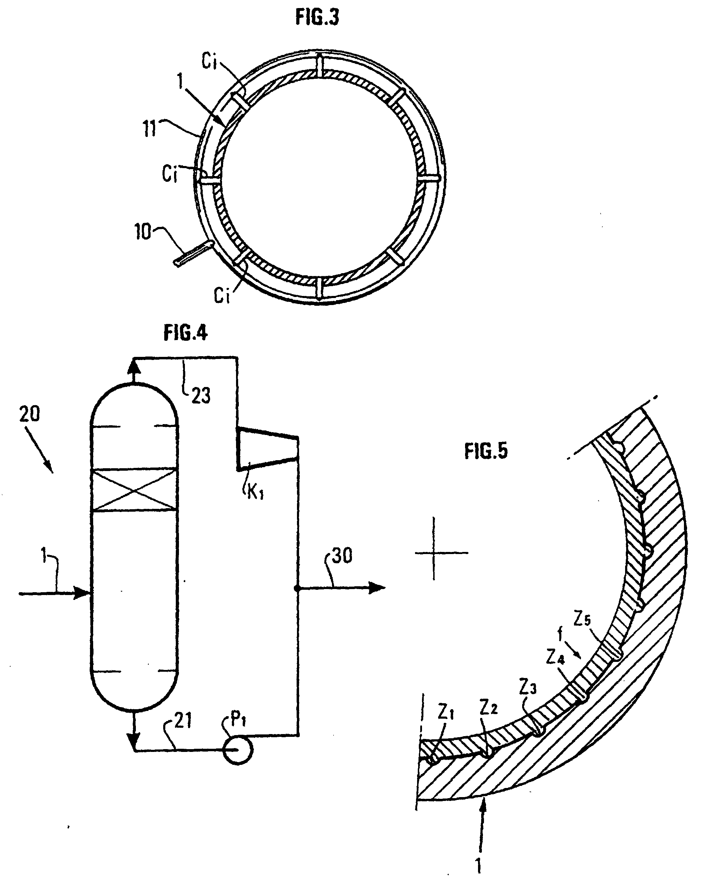

De manière à favoriser la répartition de la fraction liquide au niveau de la paroi interne de la conduite de transport, on peut l'injecter dans la conduite de transport à l'aide d'un dispositif tel que celui décrit à la figure 3, de préférence de manière à la répartir sur l'ensemble de la section circulaire de la conduite.

Pour cela, la fraction liquide arrivant par le conduit d'injection 10 similaire au conduit d'injection 3, passe dans un conduit circulaire 11 disposé de manière à entourer la conduite de transport. Le conduit circulaire communique avec l'intérieur de la conduite de transport par l'intermédiaire d'orifices ou conduits auxiliaires Ci, espacés les uns des autres, de préférence par des intervalles sensiblement réguliers, sur la totalité de la circonférence de la conduite de transport.

La forme des conduits d'injection Ci et leur répartition tout le long du conduit circulaire ou au moins en partie sont choisies pour que les pertes de charge existants dans les conduits d'injection Ci soient supérieures aux pertes de charge dans le conduit circulaire 11 et le conduit d'injection 10. De cette façon, on assure une bonne répartition de la fraction liquide injectée et on optimise la formation du film liquide ayant pour rôle de minimiser les frottements du gaz sur la paroi.

La géométrie et l'inclinaison des conduits d'injection Ci sont choisies par exemple de la nature de la fraction liquide injectée et du gaz transporté pour éviter tout problème lors de l'injection, toute turbulence qui pourrait résulter de l'opération d'injection, par exemple.

A l'arrivée sur la station de traitement ou de destination, par exemple, le gaz naturel est séparé de la fraction liquide injectée, comportant ou non des additifs, comme il a été mentionné précédemment.

Pour cela, le dispositif de séparation comporte par exemple, comme le montre la figure 1A, un séparateur 20 disposé de préférence verticalement. L'écoulement annulaire composé au moins de la fraction liquide et du gaz transporté est introduit dans le séparateur 20 par la conduite 1. La fraction liquide séparée est évacuée en fond de séparateur par le conduit 21.

La fraction gazeuse, ou gaz, passe par exemple dans un dévésicuteur 22 destiné à arrêter les petites gouttes entraînées par le gaz et qui comporte par exemple un garnissage permettant la coalescence, avant d'être évacué par le conduit 23 disposé en tête du séparateur.

Après séparation, le gaz peut être recomprimé dans un compresseur K₁, par exemple, selon le schéma de la figure 4, pour être envoyé après recompression dans une conduite 30.

La fraction liquide séparée est par exemple pompée par la pompe P₁ pour être injectée à l'entrée de la conduite 30 avec le gaz recomprimé.

On transporte le gaz recomprimé et la fraction liquide pompée sous forme d'un écoulement annulaire vers un lieu de destination ou une station de recompression.

## Revendications

1. Procédé pour transporter un gaz sous pression dans une conduite à partir d'un point vers un lieu de destination en minimisant les pertes de charge, **caractérisé en ce qu'**il comporte les étapes suivantes :
o on envoie le gaz sous pression dans une conduite de transport avec une valeur de débit fixée initialement,
o on injecte au moins en un premier endroit de ladite conduite de transport, une fraction de liquide avec un débit déterminé pour que l'ensemble formé par le gaz en écoulement et la fraction liquide injectée se présente sous forme d'un régime d'écoulement annulaire, la fraction liquide formant un film stable sur au moins une partie de la surface interne de la conduite, et
o on sépare la fraction liquide injectée du gaz sous pression à l'arrivée sur le lieu de destination.

2. Procédé selon la revendication 1, **caractérisé en ce que** l'on injecte avec la fraction liquide un produit tel qu'un additif filmogène qui favorise la stabilité du film liquide sur la paroi.

3. Procédé selon l'une des revendications 1 à 2, **caractérisé en ce que** l'état de surface interne de la conduite est constitué par un matériau mouillable par la fraction liquide injectée.

4. Procédé selon l'une des revendications 1 à 3, **caractérisé en ce que** la surface interne de la conduite est munie de rainures et/ou de zones creuses favorisant l'adhésion du film liquide sur la paroi.

5. Procédé selon l'une des revendications 1 à 4, **caractérisé en ce que** l'on détermine le débit de la fraction liquide à injecter en tenant compte de diagrammes des regimes d'écoulement obtenus par des essais.

6. Procédé selon l'une des revendications 1 et 5, **caractérisé en ce que** l'on contrôle la valeur du rapport du débit volumique de la fraction de liquide au débit volumique du gaz.

7. Procédé selon l'une des revendications 1 à 6, **caractérisé en ce que** le rapport du débit volumique de la fraction liquide injectée lors du transport du gaz sur le débit volumique de gaz est inférieur à 10 %.

8. Procédé selon l'une des revendications précédentes, **caractérisé en ce que** la valeur minimale du rapport du débit volumique de la fraction liquide au débit volumique de gaz est comprise entre 1 pour cent et 1 pour mille.

9. Procédé selon l'une des revendications 1 à 8, **caractérisé en ce que** l'on régule le débit volumique de la fraction liquide injectée de façon à maintenir la valeur du rapport du débit volumique de la fraction liquide au débit volumique de la fraction de gaz dans un intervalle de valeurs permettant de maintenir la forme de l'écoulement annulaire.

10. Procédé selon l'une des revendications précédentes, **caractérisé en ce que** l'on injecte une fraction liquide au moins en partie constituée d'une phase organique, ou par du pétrole brut ou une fraction de pétrole brut.

11. Procédé selon l'une des revendications précédentes, **caractérisé en ce que** l'on injecte un produit tel qu'un additif anticorrosion et/ou un dispersant antihydrate.

12. Procédé selon l'une des revendications précédentes, **caractérisé en ce que** l'on injecte la fraction liquide au moyen d'un dispositif adapté à répartir ladite fraction liquide sur la majorité de la périphérie de la conduite de transport.

13. Procédé selon l'une des revendications précédentes, **caractérisé en ce que** le gaz est transporté en présence d'une fraction liquide sous forme d'un écoulement annulaire d'un point de départ jusqu'à au moins une station de recompression, et **en ce que**
• on sépare le gaz et la fraction liquide avant la station de recompression,
• on pompe ladite fraction liquide séparée et on comprime séparément ladite fraction de gaz séparée,
• on réinjecte ladite fraction liquide pompée dans ladite fraction de gaz recomprimé, et
• on transporte sous la forme d'un écoulement annulaire l'ensemble formé par le gaz et la fraction liquide vers un point de destination ou une station de recompression

14. Application du procédé selon l'une des revendications 1 à 13 pour transporter un gaz sous pression, tel qu'un gaz naturel comprenant au moins 90% de méthane.

## Patentansprüche

1. Verfahren zum Transportieren eines Gases unter Druck in einer Rohrleitung von einem Ausgangspunkt zu einem Zielpunkt unter Minimierung der Beschickungsverluste, **dadurch gekennzeichnet, dass** es die folgenden Stufen umfasst:
• man transportiert das Gas unter Druck in einer Transportleitung mit einem anfänglich festgelegten Wert für die Durchsatzmenge,
• man injiziert mindestens an einer ersten Stelle der Transportleitung eine flüssige Fraktion mit einer vorgegebenen Zuführungsmenge, sodass die Gesamtmenge von strömendem Gas und injizierter flüssiger Fraktion in Form eines ringförmigen Strömungszustandes vorliegt, wobei die flüssige Fraktion mindestens auf einem Teil der inneren Oberfläche der Rohrleitung einen stabilen Film bildet, und
• man trennt die injizierte flüssige Fraktion beim Eintreffen an dem Zielpunkt von dem unter Druck stehenden Gas.

2. Verfahren nach Anspruch 1, **dadurch gekennzeichnet, dass** man zusammen mit der flüssigen Fraktion ein Produkt wie z.B. ein filmbildendes Additiv injiziert, das die Stabilität des Flüssigkeitsfilms auf der Wand fördert.

3. Verfahren nach einem der Ansprüche 1 bis 2, **dadurch gekennzeichnet, dass** die innere Oberfläche der Rohrleitung besteht aus einem Material, das durch die injizierte flüssige Fraktion benetzbar ist.

4. Verfahren nach einem der Ansprüche 1 bis 3, **dadurch gekennzeichnet, dass** die innere Oberfläche der Rohrleitung mit hohlen Rillen und/oder Zonen versehen ist, welche die Haftung des Flüssigkeitsfilms an der Wand fördern.

5. Verfahren nach einem der Ansprüche 1 bis 4, **dadurch gekennzeichnet, dass** man die Zuführungsmenge der zu injizierenden flüssigen Fraktion festlegt unter Berücksichtigung von Strömungszustandsdiagrammen, die in Versuchen erhalten wurden.

6. Verfahren nach einem der Ansprüche 1 bis 5, **dadurch gekennzeichnet, dass** man den Wert für das Verhältnis zwischen der Volumdurchflussmenge der flüssigen Fraktion und der Volumendurchflussmenge des Gases einstellt (kontrolliert).

7. Verfahren nach einem der Ansprüche 1 bis 6, **dadurch gekennzeichnet, dass** das Verhältnis zwischen der Volumendurchflussmenge der injizierten flüssigen Fraktion beim Transport des Gases und der Volumendurchflussmenge des Gases weniger als 10 % beträgt.

8. Verfahren nach einem der vorhergehenden Ansprüche, **dadurch gekennzeichnet, dass** der minimale Wert des Verhältnisses zwischen der Volumendurchflussmenge der flüssigen Fraktion und der Volumendurchflussmenge des Gases zwischen 1 % und 1 ‰ liegt.

9. Verfahren nach einem der Ansprüche 1 bis 8, **dadurch gekennzeichnet, dass** man die Volumendurchflussmenge der injizierten flüssigen Fraktion so einstellt, dass der Wert des Verhältnisses zwischen der Volumendurchflussmenge der flüssigen Fraktion und der Volumendurchflussmenge der Gasfraktion in einem Wertebereich gehalten wird, der die Aufrechterhaltung der ringförmigen Strömungsform erlaubt.

10. Verfahren nach einem der vorhergehenden Ansprüche, **dadurch gekennzeichnet, dass** man eine flüssige Fraktion injiziert, die mindestens zum Teil aus einer organischen Phase oder aus Rohöl oder aus einer Rohölfraktion besteht.

11. Verfahren nach einem der vorhergehenden Ansprüche, **dadurch gekennzeichnet, dass** man ein Produkt wie z.B. ein Antikorrosionsmittel und/oder ein Antihydrat-Dispergiermittel injiziert.

12. Verfahren nach einem der vorhergehenden Ansprüche, **dadurch gekennzeichnet, dass** man die flüssige Fraktion mit einer Vorrichtung injiziert, die geeignet ist, die flüssige Fraktion auf dem größten Teil des Umfangs der Transportleitung zu verteilen.

13. Verfahren nach einem der vorhergehenden Ansprüche, **dadurch gekennzeichnet, dass** das Gas in Gegenwart einer flüssigen Fraktion in Form einer ringförmigen Strömung von einem Ausgangspunkt zu mindestens einer Nachverdichtungsstation transportiert wird und dass man
• das Gas und die flüssige Fraktion vor der Nachverdichtungsstation voneinander trennt,
• die abgetrennte flüssige Fraktion abpumpt und die abgetrennte Gasfraktion getrennt komprimiert,
• die abgepumpte flüssige Fraktion in die nachverdichtete Gasfraktion wieder injiziert und
• die Gesamtmenge von Gas und flüssiger Fraktion in Form eines ringförmigen Stromes zu einem Zielort oder einer Nachverdichtungsstation transportiert.

14. Anwendung des Verfahrens nach einem der Ansprüche 1 bis 13 zum Transportieren eines Gases unter Druck, beispielsweise eines Erdgases, das mindestens 90 % Methan enthält.

## Claims

1. A method of transporting a gas under pressure in a pipe from a point to a destination while minimizing pressure drops, **characterized in that** it comprises the following stages:
- sending the gas under pressure into a pipeline at an initially determined flow rate value,
- injecting at least at a first point of said pipeline a liquid fraction at a flow rate so selected that the flowing gas and the liquid fraction injected flow together in form of an annular flow, the liquid fraction forming a stable film over at least part of the inner surface of the pipe, and
- separating the liquid fraction injected and the gas under pressure on arrival at the destination point.

2. A method as claimed in claim 1, **characterized in that** a product such as a film-forming additive promoting stability of the liquid film on the wall is injected with the liquid fraction.

3. A method as claimed in any one of claims 1 and 2, **characterized in that** the inner surface finish of the pipe consists of a material wettable by the liquid fraction injected.

4. A method as claimed in any one of claims 1 to 3, **characterized in that** the inner surface of the pipe is provided with grooves and/or hollow zones promoting adhesion of the liquid film to the wall.

5. A method as claimed in any one of claims 1 to 4, **characterized in that** the flow rate of the liquid fraction to be injected is determined using flow regime diagrams obtained by means of tests.

6. A method as claimed in any one of claims 1 and 5, **characterized in that** the value of the ratio of the volume flow rate of the liquid fraction to the volume flow rate of the gas is controlled.

7. A method as claimed in any one of claims 1 to 6, **characterized in that** the ratio of the volume flow rate of the liquid fraction injected during transportation of the gas to the volume flow rate of gas is less than 10 %.

8. A method as claimed in any one of the previous claims, **characterized in that** the minimum value of the ratio of the volume flow rate of liquid fraction to the volume flow rate of gas ranges between 1 % and 1 ‰.

9. A method as claimed in any one of claims 1 to 8, **characterized in that** the volume flow rate of the liquid fraction injected is regulated so as to maintain the value of the ratio of the volume flow rate of the liquid fraction to the volume flow rate of the gas fraction in a range of values selected to maintain an annular flow regime.

10. A method as claimed in any one of the previous claims, **characterized in that** a liquid fraction at least partly consisting of an organic phase or of crude oil or a crude oil fraction is injected.

11. A method as claimed in any one of the previous claims, **characterized in that** a product such as an anticorrosion additive and/or an antihydrate dispersing agent is injected.

12. A method as claimed in any one of the previous claims, **characterized in that** the liquid fraction is injected by means of a device suited to distribute said liquid fraction over the majority of the periphery of the pipeline.

13. A method as claimed in any one of the previous claims, **characterized in that** the gas is transported in the presence of a liquid fraction in form of an annular flow from a starting point to at least one recompression station, and **in that**:
- the gas and the liquid fraction are separated before the recompression station,
- said separated liquid fraction is pumped and said separated gas fraction is compressed separately,
- said pumped liquid fraction is reinjected into said recompressed gas fraction, and
- the whole consisting of the gas and the liquid fraction is transported to a destination point or to a recompression station in form of an annular flow.

14. Application of the method as claimed in any one of claims 1 to 13 for transporting a gas under pressure such as a natural gas containing at least 90 % methane.
